# EUROPEAN PATENT APPLICATION

(11) **EP 4 703 701 A1**
(43) Date of publication of application: **04.03.2026**
(21) Application number: 24197610.9
(22) Date of filing: 30.08.2024
(51) Int. Cl.: G01M 3/16, A47L 15/42, D06F 39/08, D06F 105/08, D06F 105/58

(54) **HYDRAULIC LEAK DETECTOR AND APPLIANCE INCLUDING IT**

(71) Applicant: Bonferraro S.p.A., 37060 Bonferraro (VR) (IT)
(72) Inventor: OLIVIERI, Andrea Mario, 37054 Nogara VR (IT); SOFFIATI, Andrea, 46033 Castel D Ario MN (IT); GASTALDELLI, Lucio, 46037 Roncoferraro MN (IT); TOSI, Mauro, 37051 Bovolone VR (IT)
(74) Representative: Concone, Emanuele

(57) **Abstract**

A hydraulic leak detector, for an electrical appliance that operates with water and is supplied through power supply lines (L, N) that can be interrupted by means of a disconnect switch (DS), includes an additional circuit that can be connected to the power supply lines (L, N) upstream of the disconnect switch (DS), a dual relay (DR) with a normally open contact (NO) and a normally closed contact (NC), a coil (C) configured to switch the dual relay (DR), a water sensor (WS) that has a normally open contact and is located in parallel with the normally open contact (NO) of the dual relay (DR), and an additional drain pump (ADP) arranged between the normally open contact (NO) and the normally closed contact (NC) of the dual relay (DR). These components are operatively connected to an additional electronic board configured to activate the additional drain pump (ADP) when the water sensor (WS) detects abnormal presence of water in a water-holding part of the appliance while the appliance is turned off.

## Description

The present invention relates to appliances, both domestic and industrial, which are connected to the water supply in order to operate, such as dishwashers, washing machines, sterilizers of surgical instruments, etc., and in particular a device for detecting hydraulic leaks, which can be either included in the appliance upon manufacturing or a stand-alone device added to the appliance as an aftermarket upgrade.

Water-operated appliances are known to be able to control the inflow of water from the water mains via a load electrovalve, as well as to detect any hydraulic leaks by means of sensors and to activate alarm signals and/or components that allow to drain the water (e.g., drain pump). This typical operation requires, of course, that the appliance be electrically powered, but sometimes appliances are disconnected from the power grid for safety and/or energy-saving reasons. In these situations where the appliance is completely turned off via an electrical disconnect switch, and thus de-energized, it still needs to detect possible water leaks caused, for example, by pipe ruptures, valve failure, defective sealing clamps, etc.

An appliance can thus be provided with a bottom container configured to collect leakages and containing a float or the like that allows to detect leaks by mechanically commuting a switch for direct connection to the power supply of the appliance upstream of the disconnect switch. This may result in the direct activation of the drain pump of the appliance and possibly also of a warning signal, as in CA 2192265, or in the activation of the appliance controller that in turns activates the drain pump and the possible warning signal, as in US 2011/0155176.

However, such an arrangement implies that the leak is detected only when enough water has been collected in the bottom container to cause the float to rise and commute the switch. Since the leak may easily occur within the water-holding part of the appliance, such as the drum of a washing machine or the wash tank of a dishwasher, this means that the water will be collected in the bottom container only when it starts to overflow from said water-holding part. This results in a significant delay in the detection of the leak and a greater amount of water to be drained from the appliance before it is possible to intervene on the appliance to repair it.

It is therefore the purpose of the present invention to provide a device that overcomes this drawback. Said purpose is achieved by means of a device connected directly to the power supply of the appliance, so as to remain active even when an appliance is completely turned off, equipped with sensor means to detect hydraulic leaks in the water-holding part of the appliance and with means for activating water drainage, said device including a relay connected to the appliance so as to automatically deactivate the device when the appliance is turned on. Other advantageous features of the present device are specified in the dependent claims.

The main advantage of the device according to the present invention is to promptly detect hydraulic leaks occurring in the water-holding part of the appliance while it is off and thus electrically safe. In addition, with the configuration as a stand-alone device it is possible to add this type of protection from hydraulic leaks to already installed appliances to make them more secure.

A second important advantage of this device comes from its simple structure, with reduced number of components, which allows it to be made at a low cost. It is therefore possible to offer it as an option, so that an appliance can be built in a single version that can be customized during installation, which is also advantageous from a marketing point of view.

These and other advantages and features of the device according to the present invention will be evident to those skilled in the art from the following detailed description of two embodiments thereof with reference to the attached drawings in which:
Fig.1 is a simplified circuit showing the connections between the main components of a conventional appliance;
Fig.2 is a simplified circuit showing a first embodiment of the device according to the invention, which takes advantage of the appliance's drain pump;
Fig.3 is a simplified circuit showing a second embodiment of the device according to the invention, equipped with its own drain pump;
Fig.4 is a schematic view of a conventional appliance according to the circuit of Fig.1; and
Fig.5 is a schematic view of an appliance including a device according to the first embodiment of Fig.2.

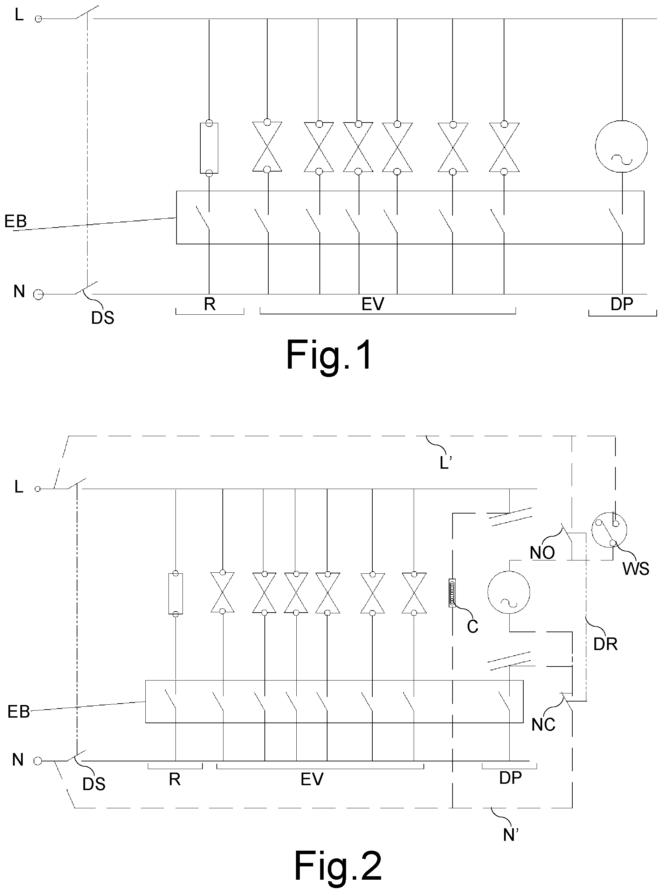

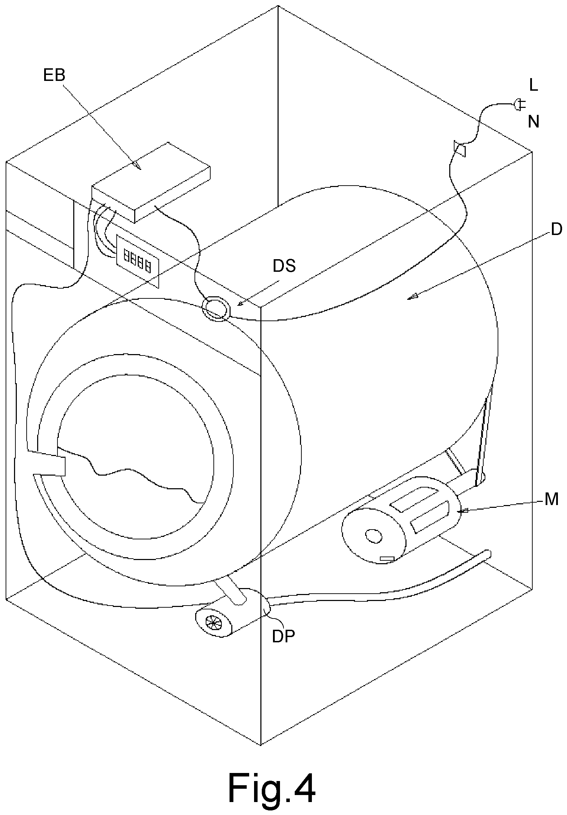

Referring to Figures 1 and 4, it can be seen that a water-operated electrical appliance traditionally includes an electronic board EB that controls a plurality of components, such as a resistor R to heat water, various electrovalves EV and a drain pump DP, as well as other components not shown in the schematic (e.g., a wash pump). Operation of the appliance depends on the power supply through phase L and neutral N lines, which can be interrupted by opening a disconnect switch DS, and in the specific example in Fig.4 a washing machine is shown, in which the water-holding part of the appliance is a drum D driven by a motor M.

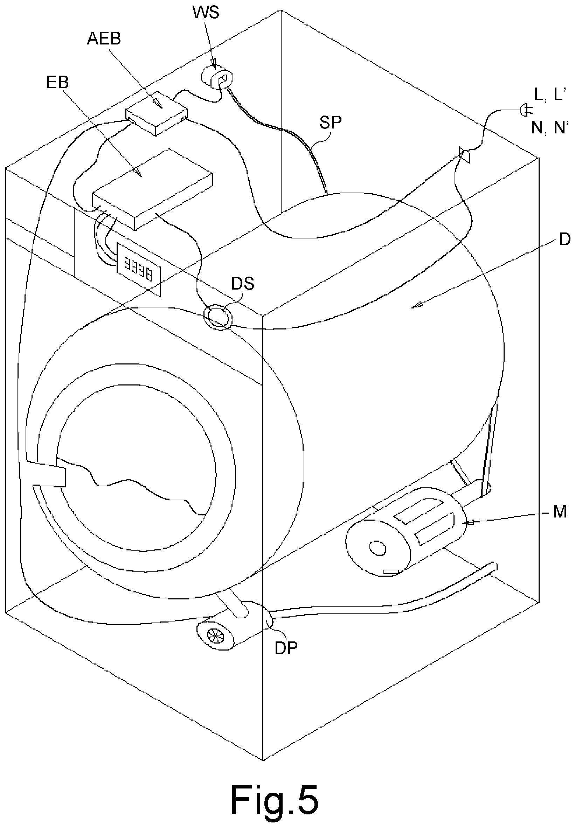

The main innovative aspect of the device according to the present invention lies in the presence of a circuit to detect hydraulic leaks in the water-holding part of the appliance even when the disconnect switch DS cuts off the power supply to the appliance, as shown in the first embodiment in figures 2 and 5. The dotted lines in Fig.2 show the additional circuit comprising a first line L' branching off from line L upstream of the disconnect switch DS, a second line N' branching off from line N upstream of the disconnect switch DS, a water sensor WS, e.g., a pressure switch or float switch, connected to drum D so as to detect a water level threshold therein, a dual relay DR with a normally open contact NO connected to said first line L' and a normally closed contact NC connected to said second line N', and a coil C connected between the phase line L downstream of the disconnect switch DS and the second line N' and configured to switch the dual relay DR between a first operating condition shown in the figure and a second off condition in which the positions of said NO, NC contacts are reversed.

More specifically, the drain pump DP is disconnected from supply lines L and N but is connected between the normally closed contact NC and the normally open contact NO of the dual relay DR, and is also connected to the normally open contact of the water sensor WS placed in parallel with said NO contact. When the appliance is turned off, if sensor WS detects, by means of a specific pipe SP, an abnormal presence of water in drum D, it closes its contact thus activating, by means of an additional electronic board AEB, the drain pump DP which is powered by the additional circuit, always connected to the L and N lines.

When the appliance is turned on, coil C located between the phase line L and the second line N' is also energized, proceeding to open the normally closed contact NC and to close the normally open contact NO, so that the drain pump DP returns under the control of the electronic board EB and sensor WS is deactivated, being placed in parallel with said NO contact, so as not to interfere with the operation of the appliance when water is loaded in drum D.

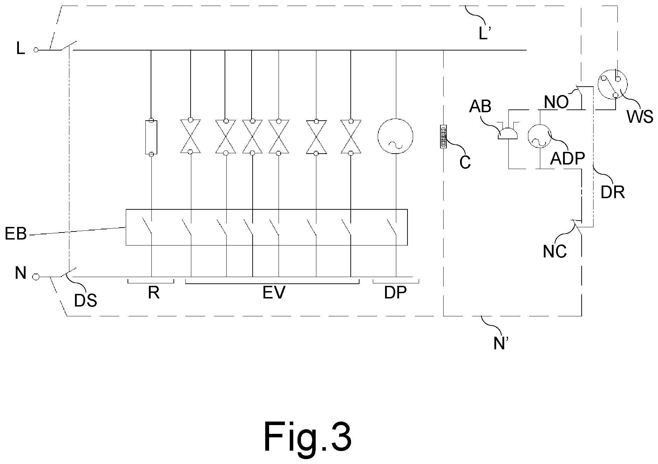

In the second embodiment shown in Fig.3, the operation is similar but in this case the device uses an additional drain pump ADP in place of the appliance's drain pump DP, which remains in its traditional location; thus, if sensor WS detects a leak in drum D, it is the additional drain pump ADP that is activated. When the appliance is turned on, coil C switches the dual relay DR to deactivate sensor WS and the additional drain pump ADP from the circuit, thus avoiding any interference with the operation of the appliance.

Note that Fig.3 also shows an alert buzzer AB arranged in parallel with the additional drain pump ADP to be operated together with it, but this element is optional and may or may not also be present in the first embodiment of Fig.2.

Also, as mentioned earlier, the device can be integrated into the appliance as shown in Fig.5, but it can also be an additional stand-alone device that is simply connected to a pre-existing appliance as an upgrade.

It is clear that the embodiments of the device according to the invention described and illustrated above are only examples susceptible to many variations. In particular, the exact type and arrangement of the elements could be varied according to specific construction requirements, realizing further variations that are within the reach of a person skilled in the art based on the description provided above.

For example, the water sensor WS could be of any type suitable for detecting a leak and could dispense with pipe SP, e.g., using a photocell or load cell wired to the additional electronic board AEB. Similarly, the alert buzzer AB, dual relay DR, and coil C can be replaced by other technically equivalent elements that perform the same functions.

## Claims

1. A hydraulic leak detector for an electrical appliance operating with water and supplied via phase and neutral power supply lines (L, N) that can be interrupted by means of a disconnect switch (DS), **characterized in that** it comprises an additional circuit including a first line (L') and a second line (N') respectively connectable to said power supply lines (L, N) upstream of said disconnect switch (DS), a water sensor (WS) connected to a water-holding part of an appliance so as to detect a water level threshold therein, a dual relay (DR) with a normally open contact (NO) connected to said first line (L') and a normally closed contact (NC) connected to said second line (N'), and a coil (C) connected between the phase power supply line (L) downstream of the disconnect switch (DS) and the second line (N') and configured to switch said dual relay (DR) between a first operating condition and a second off condition in which the positions of said contacts (NO, NC) are reversed, **and in that** said water sensor (WS) has a normally open contact and is inserted into said additional circuit (L', N') in parallel with the normally open contact (NO) of the dual relay (DR), the water sensor (WS) being operatively connected to an additional electronic board (AEB) configured to activate means of water evacuation when the water sensor (WS) detects abnormal presence of water in said water-holding part of the appliance.

2. Detector according to claim 1, **characterized in that** the means of water evacuation consist of an additional drain pump (ADP) arranged between the normally open contact (NO) and the normally closed contact (NC) of the dual relay (DR).

3. Detector according to claim 1 or 2, **characterized in that** it further includes alert means, preferably an alert buzzer (AB), located in the additional circuit (L', N') so as to be activated together with the water evacuation means.

4. Electrical appliance operating with water and supplied via phase and neutral power supply lines (L, N) that can be interrupted by means of a disconnect switch (DS), comprising a drain pump (DP) and an electronic board (EB) for controlling its components, **characterized in that** it comprises a hydraulic leak detector according to any of the preceding claims.

5. Appliance according to claim 4, **characterized in that** the drain pump (DP) is disconnected from the power supply lines (L, N) but is connected between the normally open contact (NO) and the normally closed contact (NC) of the dual relay (DR), and it is also connected to the normally open contact of the water sensor (WS), and **in that** the coil (C) is arranged in the appliance so that when the disconnect switch (DS) is closed the drain pump (DP) comes back under the control of the electronic board (EB) and the water sensor (WS) is deactivated.

6. Appliance according to claim 4, **characterized in that** the drain pump (DP) is connected between the power supply lines (L, N) and an additional drain pump (ADP) is arranged between the normally open contact (NO) and the normally closed contact (NC) of the dual relay (DR), and **in that** the coil (C) is arranged in the appliance so that when the disconnect switch (DS) is closed the additional drain pump (ADP) and the water sensor (WS) are deactivated .
